# EUROPEAN PATENT SPECIFICATION

(11) **EP 0 366 378 B1**
(45) Date of publication and mention of the grant of the patent: **25.08.1993**
(21) Application number: 89310868.8
(22) Date of filing: 23.10.1989
(51) Int. Cl.: B60R 25/10

(54) **Automobile theft-prevention device**
Kraftfahrzeugdiebstahlsicherungsvorrichtung
Dispositif antivol pour véhicule

(30) Priority: 26.10.1988 JP 270538/88
(43) Date of publication of application: 02.05.1990
(73) Proprietor: HARADA INDUSTRY CO., LTD., Shinagawa-ku Tokyo (JP)
(72) Inventor: Harada, Takuji, Hiratsuka-shi Kanagawa-ken (JP)
(74) Representative: Crawford, Andrew Birkby

(56) References cited:
- EP-A- 0 251 457
- GB-A- 2 119 552
- GB-A- 2 198 270
- GB-A- 2 218 835
- US-A- 3 703 714
- US-A- 4 646 343
- US-A- 4 821 309

## Description

The present invention relates to an automobile theft-prevention device which prevents an automobile from being stolen.

In conventional automobile theft-prevention devices, a vibration sensor is installed in the automobile. When the vibration sensor detects a vibration, a transmitter is actuated so that an emergency signal is transmitted to a receiver which the owner of the automobile who is not present at the time is in possession. As a result, the automobile owner is alerted to the fact that an attempt is being made to steal the automobile.

However, if the owner is inside a building or at some location which is a considerable distance from the automobile, the emergency signal may not reach the receiver. In such cases, the owner will be unaware that an attempt is being made to steal the automobile.

Also in conventional devices, even if the vibration sensor detects a specified vibration and thus setting off the alarm, this is not necessarily an indication of attempted theft of the automobile. For example, vibrations generated by large vehicle passing nearby or by road work can set off the anti-theft devices. In such cases, the transmitter may transmit an emergency signal indicating an attempted theft, even though no theft of the automobile is actually being attempted. In other words, such devices may issue erroneous warnings.

JP-A-62-11364 discloses a theft-prevention device for an automobile which detects an occurrence of an abnormality in a vehicle and, in response to such, causing the vehicle telephone to dial a notifee whose number is stored in a memory. The vehicle owner may thereby be informed of a theft of or from the vehicle. The device according to JP-A-62-11364 may store and call in a priority order the telephone numbers of a plurality of notifees.

The present invention provides an automobile theft-prevention device comprising an abnormal state detecting means which detects any abnormal state of an automobile; and an automobile telephone which automatically dials a predetermined telephone number when such an abnormal state is detected and reports said abnormal state;
characterized by further comprising a switching means which connects a microphone installed in said automobile to said automobile telephone and transmits the sound from said microphone to the location of said telephone number, either after receiving a command from said location to which said abnormal state has been reported or after a prescribed period of time has elapsed following the reporting of said abnormal state.

The present invention therefore provides an automobile theft-prevention device which reliably informs the owner or operator of the automobile of any attempted theft of the automobile even in cases where the owner or operator is at a location which is distant from the automobile.

The present invention also aims to provide an automobile theft prevention device which is able to ascertain an actual attempt to steal the automobile with greater accuracy.

A preferred embodiment of the present invention provides an automobile theft-prevention device which is able to force an automobile thief to abandon his attempt at theft, even in cases where the automobile has already been stolen and is in the process of being moved.

In addition to the features defined above, the device of the present invention may further include a horn driving means which activates the horn of the automobile to sound after receiving a command from the location where the abnormal state has been reported. The device may also have a means which curtails or stops the function of the electrical system of the automobile after receiving a command.

With the above described structure, when an abnormal state of the automobile is detected, a predetermined phone number is automatically dialed, and the abnormal state is reported. Accordingly, even in cases where the owner or operator of the vehicle is inside a building or at a location distant from the automobile, the owner or operator will be reliably informed of any attempt to steal the automobile.

Furthermore, since a microphone is installed in the automobile so that it is connected to the automobile telephone and the sound from the microphone is transmitted to the location where the abnormal state has been reported either after the device has received a command from the location or after a prescribed period of time has elapsed following the report of the abnormal state, an actual attempt to steal the automobile can be ascertained with greater accuracy.

In addition, the horn of the automobile is sounded, or the function of the electrical system of the automobile is curtailed or stopped, after the device receives a command from the location which has been informed of the abnormal state. Accordingly, an automobile thief can be forced to abandon his attempt at theft, or where the automobile has already been stolen, in the process of being moved.

This invention can be more fully understood from the following detailed description when taken in conjunction with the accompanying drawings, in which:
Fig. 1 is a block diagram of a first embodiment of the present invention;
Fig. 2 is a block diagram of a second embodiment of the present invention;
Fig. 3 is a block diagram of a third embodiment of the present invention;
Fig. 4 is a block diagram of a fourth embodiment of the present invention; and
Fig. 5 is a block diagram of a fifth embodiment of the present invention.

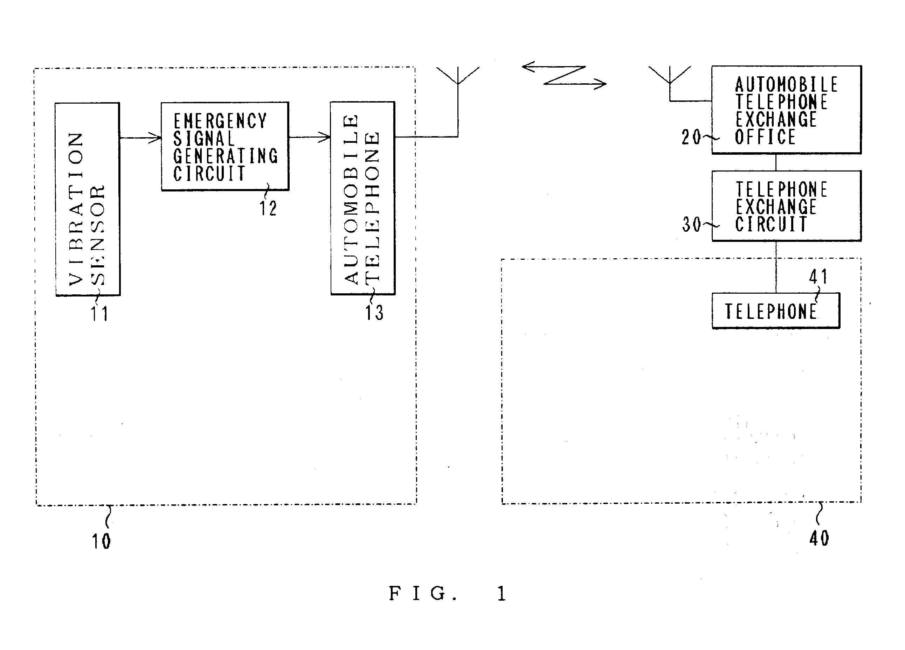

Fig. 1 illustrates a first embodiment of the present invention.

This embodiment can be divided into two main parts: an automobile 10 and a remote-destination device 40. An automobile telephone exchange office 20 and a telephone exchange circuit 30 are located between the automobile 10 and remote-destination device 40. The automobile 10 and the automobile telephone exchange office 20 are connected by wireless communication, while the automobile telephone exchange office 20 and remote-destination device 40 are connected by wire via the telephone exchange circuit 30.

The automobile 10 is equipped with a vibration sensor 11, an emergency signal generating circuit 12 and an automobile telephone 13.

The vibration sensor 11 is one example of an abnormal state detecting means which detects any abnormal state of the automobile. Thus, the sensor 11 detects any attempt that is made to steal the automobile 10. Another example of an abnormal state detecting means that can be used in the present invention is a sensor that detects any starting of the engine without insertion of the ignition key.

The emergency signal generating circuit 12 generates a recorded message such as "SOMEONE IS TRYING TO STEAL THE CAR", etc. or a special warning sound such as a buzzer sound, etc., when the vibration sensor 11 has detected a specified vibration.

An remote-destination device 40 is a regular phone 41 or may be a portable telephone, an automobile telephone in another automobile, or a pocket bell, etc.

When the owner or operator of the automobile is driving the automobile 10, the automobile telephone 13 functions as an ordinary automobile telephone. When no one is present in the automobile 10, the vibration sensor 11 is connected to the automobile telephone 13 via the emergency signal generating circuit 12. The system may be designed so that when the absence of persons from the automobile is detected automatically, the vibration sensor 11 is automatically connected to the automobile telephone 13, or the system may be designed so that the connection is made manually.

When the automobile is disturbed by the breakage of glass or the jimmying of a door, while no one is present in the automobile, the vibration sensor 11 detects the resulting vibration, and the emergency signal generating circuit 12 generates a preset voice message such as, "SOMEONE IS TRYING TO STEAL THE CAR". At this time, the automobile telephone 13 automatically dials a predetermined telephone number and reports the abnormality.

Furthermore, if there is no answer after the telephone 41, i.e. the first remote-destination device has rung a prescribed number of times (that is, after the automobile 13 counted a prescribed number of rings), the automobile telephone 13 automatically dials the number of another remote-destination device and report the abnormal state. If there is no answer at this second remote-destination device after a prescribed number of rings, the automobile telephone 13 proceeds to automatically dial the number of a third remote-destination device, and then the number of a fourth remote-destination device, and so on, in sequence. If there is no answer at any of these remote-destination devices, the automobile telephone 13 again automatically dials the numbers in sequence, beginning with the number of the first remote-destination device.

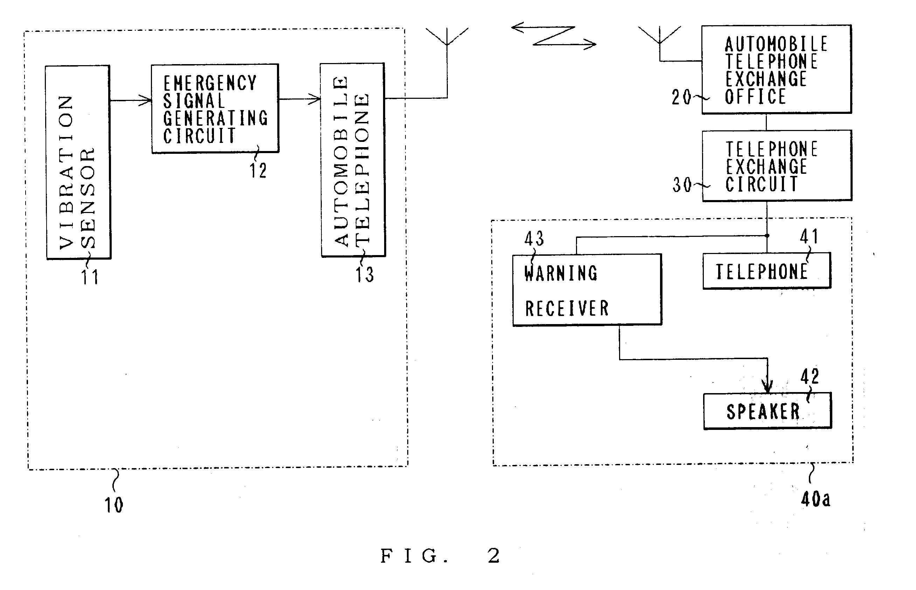

Fig. 2 is a block diagram of a second embodiment of the present invention.

In this embodiment, a speaker 42 and a warning receiver 43 are installed in a remote-destination device 40a which corresponds to the remote-destination device 40 of the first embodiment. When the warning receiver 43 receives an emergency signal from the automobile telephone 13, the receiver 43 causes a warning sound or the voice message from the automobile telephone 13 to be emitted from the speaker 42.

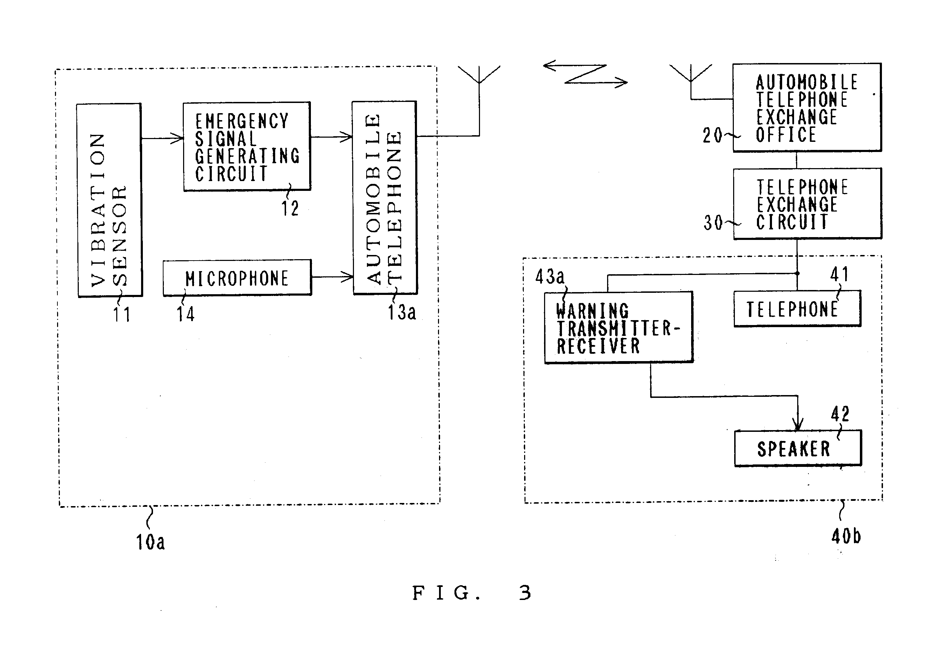

Fig. 3 shows a third embodiment of the present invention.

This third embodiment differs from the previous embodiments in that the automobile 10a has an automobile telephone 13a to which a microphone 14 is connected. This microphone 14 detects sounds inside and outside the automobile 10a. The automobile telephone 13a has a switching means which operates as follows:

When the automobile telephone 13a receives a prescribed command from the remote-destination device 40a (to which the abnormal state has been reported) or after a prescribed period of time has elapsed following the reporting of the abnormal state, a switching means connects the microphone 14 to the automobile telephone 13a, so that the sound from the microphone 14, that is, the sound picked up by the microphone 14, is transmitted to the remote-destination device 40b.

In other words, after the vibration sensor 11 has detected a vibration and the automobile telephone 13a has reported this abnormal state to the remote-destination device 40b, the microphone 14 is connected to the automobile telephone 13a instead of the emergency signal generating circuit 12, so that sounds detected inside and/or outside of the automobile are transmitted to the telephone 41 and/or speaker 42. Accordingly, a person in the vicinity of the remote-destination device 40b can hear the sounds from the microphone 14 and is able to ascertain whether the vibration detected by the vibration sensor 11 is actually related to an attempted theft of the automobile or is merely an unrelated vibration. As a result, actual attempts at theft can be detected more accurately than in the case where any vibration detected by the vibration sensor 11 is immediately taken as an indication of attempted theft of the automobile.

Furthermore, it would also be possible to install a warning transmitter-receiver 43a having a switching function for the connection of the microphone 14 to the automobile telephone 13a instead of the emergency signal generating circuit 12. This switching function is used in order to switch the microphone 14 to the automobile telephone 13a.

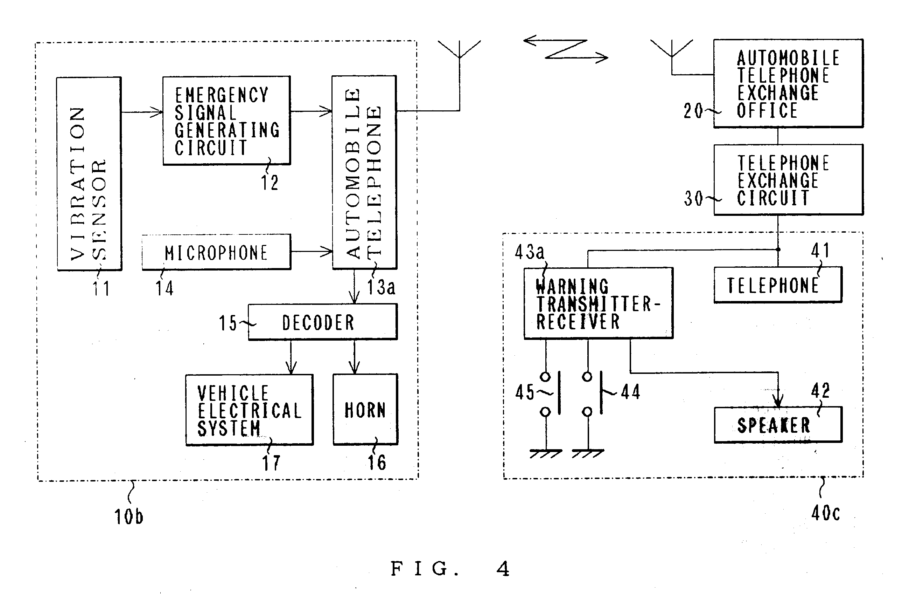

Fig. 4 shows a fourth embodiment of the present invention.

In this embodiment, the automobile 10b is equipped with a horn 16, vehicle electrical system 17 and a decoder 15 which sends signals to the horn 16 and the electrical system 17. The remote-destination device 40c has a warning signal transmitter-receiver 43a having a horn switch 44 and an engine STOP switch 45 installed therein.

When the horn switch 44 is pressed, it causes the horn 16 of the automobile 10b to sound. When the engine STOP switch 45 is pressed, it stops the electrical system 17 of the automobile 10b and thus stops the engine of the automobile 10b. The vehicle electrical system 17 may consist of the automobile engine ignition circuit, the automobile battery circuit or a microcomputer used to control vehicle operation, etc. When the engine STOP switch is pressed, the ignition circuit is opened, the battery is discharged or the operating functions of the controlling microcomputer are stopped.

The fourth embodiment operates as follows:
When the vibration sensor 11 detects a vibration, the remote-destination device 40c is informed of the occurrence of an abnormality. Afterward, a person at the location at the remote-destination device 40c listens to the sounds inside and outside the automobile 10b via the microphone 14. If it is ascertained that a theft is in progress, the horn 16 of the automobile 10b is sounded by pressing the horn switch 44, or the functioning of the vehicle electrical system 17 is curtailed or stopped by pressing the engine STOP switch 45. As a result, the running speed of the automobile is reduced, or the automobile is caused to come to a complete stop.

In this way, the automobile thief abandons his attempted theft of the automobile. Furthermore, even if the automobile is being moved by the thief to another location, the drop in the running speed or stopping of the engine will prevent the automobile from being moved further.

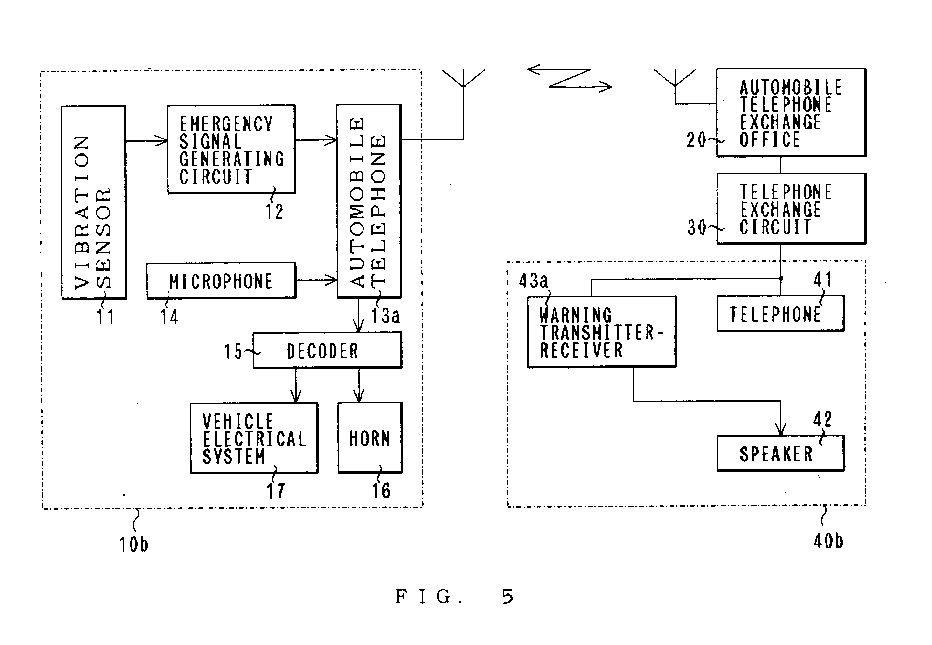

Fig. 5 shows a fifth embodiment of the present invention.

In this embodiment, the horn switch 44 and the engine STOP switch 45 of the fourth embodiment are omitted. Instead, when the warning signal transmitter-receiver 43a receives an emergency signal from the automobile telephone 13a, it automatically generates a signal in response to the automobile telephone 13a, and either sounds the horn 16 or curtails or stops the functioning of the electrical system 17.

Furthermore, the microphone 14 may consist of the transmitter (microphone) installed in the automobile telephone 13a or may be a separately installed microphone. Moreover, a voice signal or warning sound indicating that the abnormality sensor has detected an abnormality, and the sound from the microphone 14 may be transmitted simultaneously.

According to the automobile theft-prevention device of the invention, the owner or operator of the automobile is informed of any attempt to steal the automobile, even if the owner or operator is inside a building or at a location away from the automobile. Furthermore, the present invention makes it possible to ascertain actual attempts at theft with greater accuracy. In addition, the present invention makes it possible to force an automobile thief to abandon the theft even if the automobile is in the process of being moved.

## Claims

1. An automobile theft-prevention device comprising an abnormal state detecting means (11) which detects any abnormal state of an automobile; and an automobile telephone (13, 13a) which automatically dials a predetermined telephone number when such an abnormal state is detected and reports said abnormal state;
characterized by further comprising a switching means which connects a microphone (14) installed in said automobile to said automobile telephone and transmits the sound from said microphone to the location of said telephone number, either after receiving a command from said location to which said abnormal state has been reported or after a prescribed period of time has elapsed following the reporting of said abnormal state.

2. An automobile theft-prevention device according to claim 1, further characterized by comprising a horn driving means (15) which sounds the automobile horn (16) after receiving a command from said location where said abnormal state has been reported.

3. An automobile theft-prevention device according to claim 1, further characterized by comprising an electrical system control means (17) which curtails or stops the functioning of the vehicle electrical system of said automobile after receiving a command from said location where said abnormal state has been reported.

4. An automobile theft-prevention device according to claim 3, wherein said control means is one selected from the group consisting of a means which opens the ignition circuit of the automobile, a means which discharges the battery and a means which stops the operation of a microcomputer which is used for control of the vehicle operation.

5. An automobile theft-prevention device according to claim 1, 2 or 3, wherein said microphone is either a transmitter of said automobile telephone or a microphone which is separately installed in said automobile.

6. An automobile theft-prevention device according to claim 1, 2, or 3, wherein said automobile telephone automatically dials a plurality of telephone numbers in sequence so that said telephone automatically dials the next number in said sequence if there is no answer at one of said numbers after a specified number of rings.

7. An automobile theft-prevention device according to claim 1, 2, 3 or 6, further comprising an emergency signal generating means (12) which generates a recorded voice or a special warning tone, and said automobile telephone transmits said recorded voice or special warning tone to said location.

## Patentansprüche

1. Eine Kraftfahrzeug-Diebstahlsicherungsvorrichtung mit einer Erkennungsvorrichtung (11) für einen abnormalen Zustand, welche jeden abnormalen Zustand eines Kraftfahrzeuges erkennt; und einem Autotelefon (13, 13a) welches automatisch eine bestimmte Telefonnummer wählt, wenn ein derartiger abnormaler Zustand erkannt wird und den abnormalen Zustand weitermeldet, gekennzeichnet durch weiterhin eine Schaltvorrichtung, welche ein Mikrophon (14), welches in dem Kraftfahrzeug eingebaut ist mit dem Autotelefon verbindet und Geräusche von dem Mikrophon an den Ort der Telefonnummer überträgt, entweder nach Empfang eines Befehls von dem Ort, an welchen der abnormale Zustand berichtet wurde, oder nach dem eine bestimmte Zeitdauer dem Bericht des abnormalen Zustandes folgend verstrichen ist.

2. Eine Kraftfahrzeug-Diebstahlsicherungsvorrichtung nach Anspruch 1, weiterhin gekennzeichnet durch eine Hupen-Treibervorrichtung (15), welche die Kraftfahrzeughupe (16) nach Empfang eines Befehls von dem Ort, an welchen der abnormale Zustand berichtet wurde, aktiviert.

3. Eine Kraftfahrzeug-Diebstahlsicherungsvorrichtung nach Anspruch 1, weiterhin gekennzeichnet durch eine Steuervorrichtung (17) für das elektrische System, welche die Funktionen des elektrischen Fahrzeugsystems des Kraftfahrzeuges nach Empfang eines Befehls von dem Ort, wohin der abnormale Zustand berichtet wurde, einschränkt oder unterbricht.

4. Eine Kraftfahrzeug-Diebstahlsicherungsvorrichtung nach Anspruch 3, worin die Steuervorrichtung eine aus der nachfolgenden Gruppe ist: eine Vorrichtung, welche den Zündschaltkreis des Fahrzeuges öffnet, eine Vorrichtung, welche die Batterie entlädt und eine Vorrichtung, welche die Arbeitsweise eines Mikrocomputers unterbricht, der zur Steuerung der Fahrzeugvorgänge verwendet wird.

5. Eine Kraftfahrzeug-Diebstahlsicherungsvorrichtung nach Anspruch 1, 2 oder 3, worin das Mikrophon entweder ein Übertrager des Autotelefons oder ein Mikrophon ist, welches separat in das Kraftfahrzeug eingebaut ist.

6. Eine Kraftfahrzeug-Diebstahlsicherungsvorrichtung nach Anspruch 1, 2 oder 3, worin das Autotelefon automatisch eine Mehrzahl von Telefonnummern in einer Reihenfolge wählt, so daß das Telefon automatisch die nächste Nummer in der Reihenfolge wählt, wenn bei einer der Nummern nach einer bestimmten Anzahl von Läutvorgängen keine Antwort erfolgt.

7. Eine Kraftfahrzeug-Diebstahlsicherungsvorrichtung nach Anspruch 1, 2, 3 oder 6, weiterhin mit einer Notsignal-Erzeugungsvorrichtung (12), welche eine aufgezeichnete Stimme oder einen speziellen Warnton erzeugt, wobei das Autotelefon die aufgezeichnete Stimme oder den speziellen Warnton an den Ort überträgt.

## Revendications

1. Un dispositif antivol pour automobile comprenant un moyen (11) de détection d'état anormal qui détecte tout état anormal d'une automobile; et un téléphone (13, 13a) d'automobile qui compose automatiquement un numéro de téléphone prédéterminé quand un tel état anormal est détecté et signale ledit état anormal;
caractérisé par le fait qu'il comprend, en outre, un moyen de commutation qui connecte un microphone (14), installé dans ladite automobile, audit téléphone d'automobile et transmet le son dudit microphone jusqu'à l'endroit correspondant audit numéro de téléphone, soit après avoir reçu une instruction depuis cet endroit auquel a été signalé ledit état anormal, soit après qu'une période de temps prédéterminée se soit écoulée à la suite du signalement dudit état anormal.

2. Dispositif antivol pour automobile selon la revendication 1, caractérisé en outre par le fait qu'il comprend un moyen (15) d'actionnement d'avertisseur qui met en fonction l'avertisseur (16) de l'automobile après avoir reçu une instruction depuis ledit endroit auquel a été signalé ledit état anormal.

3. Dispositif antivol pour automobile selon la revendication 1, caractérisé en outre par le fait qu'il comprend un moyen (17) de commande de système électrique qui abrège ou arrête le fonctionnement du système électrique de ladite automobile après avoir reçu une instruction depuis l'endroit où ledit état anormal a été signalé.

4. Dispositif antivol pour automobile selon la revendication 3, dans lequel le moyen de commande est un moyen choisi parmi le groupe comprenant un moyen qui ouvre le circuit d'allumage de l'automobile, un moyen qui décharge la batterie et un moyen qui arrête le fonctionnement d'un micro-ordinateur utilisé pour commander le fonctionnement du véhicule.

5. Dispositif antivol pour automobile selon la revendication 1, 2 ou 3, dans lequel le microphone est soit l'émetteur dudit téléphone d'automobile soit un microphone qui est installé séparément dans ladite automobile.

6. Dispositif antivol pour automobile selon la revendication 1, 2 ou 3 , dans lequel ledit téléphone d'automobile compose automatiquement une pluralité de numéros de téléphone suivant une séquence de telle sorte que ledit téléphone compose automatiquement le numéro suivant de ladite séquence s'il ne reçoit aucune réponse à un desdits numéros après un nombre spécifié d'appels.

7. Dispositif antivol pour automobile selon la revendication 1, 2, 3 ou 6, comprenant en outre un moyen (12) de génération de signal d'urgence qui engendre une voix enregistrée ou une tonalité d'avertissement spéciale et ledit téléphone d'automobile transmet la voix enregistrée ou la tonalité vers ledit endroit.
